(19) Europäisches Patentamt

European Patent Office

Office européen des brevets

(11) **EP 2 961 136 B1**

(12) **EUROPEAN PATENT SPECIFICATION**

(45) Date of publication and mention
of the grant of the patent:
**17.05.2017 Bulletin 2017/20**

(51) Int Cl.:
**H04L 29/08** (2006.01)  **G06F 9/50** (2006.01)

(21) Application number: **15173227.8**

(22) Date of filing: **23.06.2015**

(54) **AN APPARATUS, METHOD AND SYSTEM FOR DYNAMIC ALLOCATION OF SHARED CLOUD-BASED RESOURCES**

VORRICHTUNG, VERFAHREN UND SYSTEM ZUR DYNAMISCHEN ZUWEISUNG VON GEMEINSAM GENUTZTEN CLOUD-BASIERTEN RESSOURCEN

APPAREIL, PROCÉDÉ ET SYSTÈME D'ATTRIBUTION DYNAMIQUE DE RESSOURCES EN NUAGE PARTAGÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.06.2014 US 201462015999 P**
**19.06.2015 US 201514744667**

(43) Date of publication of application:
**30.12.2015 Bulletin 2015/53**

(73) Proprietor: **Synchronoss Technologies, Inc.**
**Bridgewater, NJ 08807 (US)**

(72) Inventors:
• **Bellomo, Michael Anthony**
**Coopersburg, 18036 (US)**
• **Byrne, Eoin**
**Dublin, 14 (IE)**
• **Griffin, Brendan**
**Athenry (IE)**
• **Saternos, Casimir**
**Emmaus, PA Pennsylvania 18049 (US)**
• **Miller, Scott Patrick**
**Doylestown, PA Pennsylvania 18901 (US)**

(74) Representative: **Branderhorst, Matthijs Pieter Arie et al**
**Marks & Clerk LLP**
**Fletcher House**
**Heatley Road**
**The Oxford Science Park**
**Oxford OX4 4GE (GB)**

(56) References cited:
**US-A1- 2005 050 107    US-A1- 2014 095 826**
**US-B1- 7 739 614**

• **KARMON K ET AL: "GWiQ-P: an efficient decentralized grid-wide quota enforcement protocol", HIGH PERFORMANCE DISTRIBUTED COMPUTING, 2005. HPDC-14. PROCEEDINGS. 14 TH IEEE INTERNATIONAL SYMPOSIUM ON RESEARCH TRIANGLE PARK, NC, USA JULY 24-27, 2005, PISCATAWAY, NJ, USA,IEEE, 24 July 2005 (2005-07-24), pages 222-232, XP010843426, DOI: 10.1109/HPDC.2005.1520964 ISBN: 978-0-7803-9037-9**

**Description**

Field of Invention

The present invention relates to allocation of resources. More particularly, the present invention relates to an apparatus, method and system for dynamic allocation of shared cloud-based resources.

Background of the invention

Cloud-based deployments require allocation of resources, in which specific limits (or quotas) are specified for each user. Prior art processes are highly inefficient, as resources remain unused, while users that require additional usage have none available due to unnecessarily restrictive quota specifications. US 2014/095826 discloses a datastore for a virtual machine that can be executed on a host computer networked to a physical storage system which is allocated by a server. Karmon K. et al. discloses "GWiQ-P: an efficient decentralized grid-wide quota enforcement protocol", in High Performance Distributed Computing, 2005, HPDC-14 Proceedings, 14th IEEE International Symposium on Research Triangle Park, NC, USA, pages 222-232. US 2005/050107 discloses a tree quota identifier which is included in a file handle returned by the file server to a client in response to a directory lookup request.

Brief Summary of the Invention

The invention is defined by the independent claims. Embodiments of the present invention are directed to dynamically allocating shared cloud-based resources among multiple parties. A cloud provider provides a quota service that implements two quota allocation models: a reserved model and a hybrid model. The reserved model allows for reserved quota allocations, and the hybrid model allows for both reserved and fair use quota allocations. Quota trees are used to track resource usage and to ensure usage remains within specified quota limits. While the cloud provider is able to efficiently manage its resources, an organization that uses the cloud provider's resources does not need to purchase as many resources, such as space, bandwidth, memory usage, processing power, or other unit of work.

Further, a system for dynamic allocation of shared resources is provided. The system includes a cloud-based resource. The system also includes a quota server that is communicatively coupled with the cloud-based resource. The quota server is configured to maintain a quota tree that includes a plurality of nodes arranged in a hierarchical workspace structure, receive a request to consume the cloud-based resource, wherein the request includes a requested consumption value, determine a node from the plurality of nodes that is associated with a workspace that the request is from, calculate a first available resource value associated with the node, perform a first routine when the node is of a first type, and perform a second routine when the node is of a second type.

In some embodiments, the quota tree includes a root node associated with an organization. In some embodiments, the quota tree includes nodes below the root node, wherein each of the nodes below the root node is associated with a different workspace.

In some embodiments, the workspace is associated with an entity within the organization.

In some embodiments, first type is a reserved quota node, and the second type is a fair use quota node.

In some embodiments, the quota server is also configured to maintain rules and to build the quota tree according to the rules.

In some embodiments, the quota server is also configured to automatically update usage metrics associated with the quota tree.

In some embodiments, the first routine includes when the first available resource value is at least equal to the requested consumption value, allowing the cloud-based resource to be consumed by the workspace, and when the first available resource value is less than the requested consumption value, preventing the cloud-based resource to be consumed by the workspace.

In some embodiments, wherein the second routine includes when the first available resource value is less than the requested consumption value, preventing the cloud-based resource to be consumed by the workspace, and when the first available resource value is at least equal to the requested consumption value, traversing one or more of the nodes of the quota tree towards the root node until a currently traversed node is of the first type, calculating a second available resource value associated with the currently traversed node, allowing the cloud-based resource to be consumed by the workspace when the second available resource value is at least equal to the requested consumption value, and preventing the cloud-based resource to be consumed by the workspace when the second available resource value is less than the requested consumption value.

In some embodiments, the system further includes at least one network component, wherein the at least one network component interfaces with the quota server via a set of APIs.

In some embodiments, the at least one network component includes a plurality of network components, and the quota server is further configured to fine grain track usage of the cloud-based resource among the plurality of network components.

In some embodiments, the at least one network component is associated with a single workspace.

Further, a non-transitory computer readable medium is provided. The non-transitory computer readable medium includes memory that stores instructions which, when executed by a processor of a computing device, cause the computing device to perform a method of dynamically allocating shared resources. The method includes maintaining a quota tree that includes a plurality of nodes arranged in a hierarchical workspace structure, receiving a request to consume a cloud-based resource, wherein the request includes a requested consumption value, determining a node from the plurality of nodes that is associated with a workspace that the request is from, calculating a first available resource value associated with the node, performing a first routine when the node is of a first type, and performing a second routine when the node is of a second type.

In some embodiments, the cloud-based resource is disk space. Other resources are contemplated.

In some embodiments, the request is a request to upload a file to the computing device, and the requested consumption value is a file size of the file to be uploaded to the computing device.

In some embodiments, the first routine includes when the first available resource value is at least equal to the file size, allowing the file to be uploaded from the workspace, and when the first available resource value is less than the file size, preventing the file from being uploaded from the workspace.

In some embodiments, the second routine includes when the first available resource value is less than the file size, preventing the file from being uploaded from the workspace, and when the first available resource value is at least equal to the file size, traversing one or more of the nodes of the quota tree towards the root node until a currently traversed node is of the first type, calculating a second available resource value associated with the currently traversed node, allowing the file to be uploaded from the workspace when the second available resource value is at least equal to the file size, and preventing the file from being uploaded from the workspace when the second available resource value is less than the file size.

Further, a method of dynamically allocating shared resources is provided. The method includes maintaining by a quota server a quota tree that includes a plurality of nodes arranged in a hierarchical workspace structure, receiving by the quota server from a workspace a request to consume a cloud-based resource, wherein the request includes a requested consumption value, determining a node from the plurality of nodes that is associated with the workspace, calculating a first available resource value associated with the node, performing a first routine when the node is of a first type, and performing a second routine when the node is of a second type.

In some embodiments, the first routine includes when the first available resource value is at least equal to the requested consumption value, allowing the cloud-based resource to be consumed by the workspace, and when the first available resource value is less than the requested consumption value, preventing the cloud-based resource to be consumed by the workspace.

In some embodiments, wherein the second routine includes when the first available resource value is less than the requested consumption value, preventing the cloud-based resource to be consumed by the workspace, and when the first available resource value is at least equal to the requested consumption value, traversing one or more of the nodes of the quota tree towards the root node until a currently traversed node is of the first type, calculating a second available resource value associated with the currently traversed node, allowing the cloud-based resource to be consumed by the workspace when the second available resource value is at least equal to the requested consumption value, and preventing the cloud-based resource to be consumed by the workspace when the second available resource value is less than the requested consumption value.

Brief Description of the Drawings

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.

Figure 1 illustrates an exemplary quota management system in accordance with some embodiments.
Figure 2A illustrates an exemplary quota tree in accordance with some embodiments.
Figure 2B illustrates another exemplary quota tree in accordance with some embodiments.
Figures 3A-3C illustrate exemplary methods in accordance with some embodiments.
Figure 4 illustrates yet another exemplary quota tree in accordance with some embodiments.
Figure 5 illustrates a block diagram of an exemplary computing device in accordance with some embodiments.

Detailed Description of the Invention

In the following description, numerous details are set forth for purposes of explanation. However, one of ordinary skill in the art will realize that the invention can be practiced without the use of these specific details. Thus, the present invention is not intended to be limited to the embodiments shown but is to be accorded the widest scope consistent with the principles and features described herein.

Cloud computing resources include limited resources such as processors, disk space, memory, network bandwidth, and the like. At any given time, a portion of resources is allocated to an organization (enterprise). The organization is able to choose how to distribute its allocated resources among entities within the organization.

Embodiments of the present invention are directed to dynamically allocating shared cloud-based resources among multiple parties. A cloud provider provides a quota service that implements two quota allocation models: a reserved model and a hybrid model. The reserved model allows for reserved quota allocations, and the hybrid model allows for both reserved and fair use quota allocations. Quota trees are used to track resource usage and to ensure usage remains within specified quota limits. While the cloud provider is able to efficiently manage its resources, an organization that uses the cloud provider's resources does not need to purchase as many resources, such as space, bandwidth, memory usage, processing power, or other unit of work.

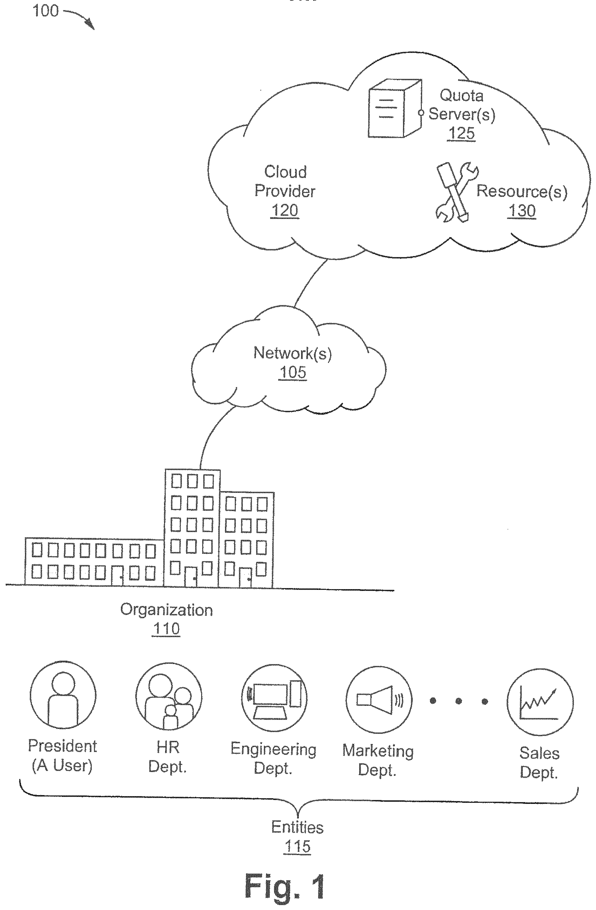

Figure 1 illustrates an exemplary quota management system 100 in accordance with some embodiments. The quota management system 100 includes an organization 110 and a cloud provider 120 interconnected by a network 105, such as the Internet. The cloud provider 120 provides cloud-based resource(s) 130 to the organization 110 and maintains an enterprise account that is associated with the organization 110. The enterprise account includes information about the organization 110 and specifies the organization's subscription to the cloud-based resource(s) 130, such as which resources the organization 110 is subscribing to, quota associated with each of the subscribed resources, subscription cost, etc. The enterprise account can also include other pertinent information, such as the different entities within the organization 110 that will be sharing the pool of subscribed resources.

The cloud provider 120 can be a cellular operator, such as AT&T. The organization 110 can be a group of entities 115 within the organization 110. An entity can represent a single user, a team, a department, a business unit or a combination thereof that is/are using a shared internal account. In Figure 1, each of the President, the HR department, the Engineering department, the Marketing department and the Sales department is shown as an entity. As such, each of the President, the HR department, the Engineering department, the Marketing department and the Sales department has its own internal account.

The cloud-based resources 130 can be any computing hardware or software (physical or virtual), which are allocated to any of the entities 115. Exemplary cloud-based resources 130 include processors, disk space, memory, network bandwidth, and/or the like. In some embodiments, the cloud-based resources 130 include an objective means of tracking resource usage.

The cloud provider 120 maintains a quota server 125 that is configured to enable fine grained control over the entities 115, creation of a workspace for each entity 115, and management of quota over each workspace. The quota server 125 and the resources 130 are communicatively coupled. Although the quota server 125 is shown separately from the resources 130, the resources 130 can be co-located with the quota server 125. In some embodiments, enterprise accounts are stored at the quota server 125 or at another server that is accessible by the cloud provider 120.

In Figure 1, a single organization 110 and a single cloud provider 120 are shown in the quota management system 100 for simplicity and ease of illustration. However, the quota management system 100 can include a plurality of organizations 110. In some embodiments, a cloud provider 120 can provide its resources 130 to a plurality of organizations 110. The system 100 can also include a plurality of cloud providers 120. In some embodiments, an organization 110 can subscribe to the plurality of cloud providers 120 to access resources 130 that are provided by the plurality of cloud providers 120. Each cloud provider 120 typically provides the quota service described herein.

Exemplary roles involved in the quota management system 100 include an operator administrator, an IT administrator, a network component and an end user. The operator administrator is a user who works for the operator 120 and configures enterprise accounts. The IT administrator works for the organization 110, creates workspaces, maps entities 115 to the workspaces and assigns quotas to the workspaces. The IT administrator has a high degree of control as to how much of the shared resources 130 each entity 115 has access to. The network component is an umbrella term used for various products or systems using the quota service to track quota. The end user is an entity 115 associated with the organization 110 who takes actions that affect quota resource usage.

The quota management system 100 includes two different types of quota allocation: fair usage quota allocation and reserved quota allocation. Both types of quota allocation restrict a workspace size. However, one type provides a guarantee that a workspace can reach that size, while the other type does not.

Reserved quota allocations cannot be oversubscribed. A reserved quota is a quota that a carrier assigns to an organization. It is the amount of resources the organization pays for and, as such, will always be available to the organization. A reserved quota is at the top of every quota tree (at the organization level, which is the root of the quota tree). Similarly, a reserved quota allocation limits an entity and assures the entity that the given amount of resources is available. At the time of allocation, validation must be done to ensure that its quota is greater than or equal to the reserved quota on all child nodes. Quota trees are explained elsewhere.

Unlike reserved quota allocations, fair usage quota allocations can be oversubscribed. Fair usage quota allocations are used by an IT administrator to ensure that within their organization, no one workspace grows out of control to the detriment of the rest of the organization. Fair usage quota allocations are used to avoid one workspace consuming all available resources. Such quota allocations specify an upper limit but does not a guarantee that the amount of available resources will be available. For example, a workspace group assigned a 2GB quota is limited in that it cannot exceed this limit, but other limits may come into effect before workspace gets to 2GB (e.g., another entity which shares the pool of resources might currently be consuming them). Using this quota allocation type, the IT administrator can assign, for example, 100GB available to the organization among 10 workspaces with 20GB quota each. Although not all workspaces can consume 20GB at the same time, the fair usage quota avoids one large workspace from depriving the others of available quota that they need for a period of time.

The management of these quota allocations can be accomplished using different strategies that are implemented under two models: reserved model and hybrid model. In some embodiments, only one type of quota allocation can be assigned to a given workspace, regardless of the model used. The reserved model is the simplest model and only allows for reserved quota allocations. In some embodiments, the reserved model is the default model. The hybrid model allows for both reserved and fair use quota allocations. The hybrid model is an extension of the reserved model that includes the added ability to assign fair use allocations. If no fair use allocations are used, then it is functionally equivalent to the reserved model.

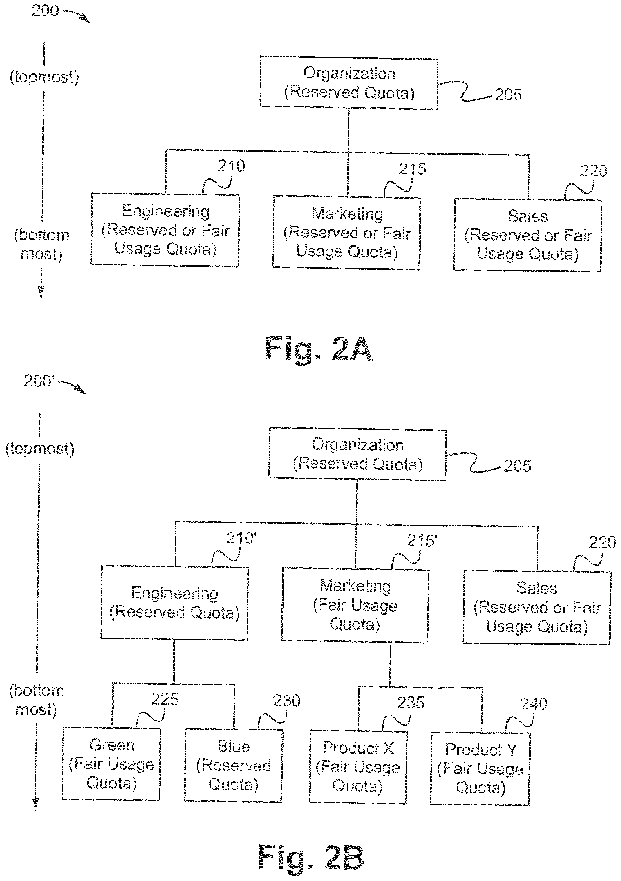

Quotas are organized using a quota tree. Figure 2A illustrates an exemplary quota tree 200 in accordance with some embodiments. An organization, such as the organization 110, is given or assigned a quota 205 by a carrier based on the organization's subscription to its resources. This quota 205 is a reserved quota at the root of the quota tree 200. This quota 205 is broken into a plurality of quotas, one for each workspace. An IT administrator of the organization assigns quotas 210, 215, 220 to the Engineering, the Marketing, and the Sales departments, respectively, which are workspaces. Each of the quotas 210,215,220 can be a reserved quota or a fair usage quota.

Figure 2B illustrates another exemplary quota tree 200' in accordance with some embodiments. A workspace can be further subdivided into a plurality of workspaces. For example, the Engineering workspace and the Marketing workspace each can be subdivided into two workspaces. The IT administrator of the organization is able to assign quotas 225, 230 to the Green team and the Blue team, respectively, under the Engineering department, and to assign quotas 235,240 to the Product X team and the Product Y team, respectively, under the Marketing department. In Figure 2B, the quotas 225, 235, 240 are fair usage quotas, while the quota 230 is a reserved quota.

A quota tree can be extended downwards as needed with much larger depths and/or widths. A quota tree is constructed with certain rules in place. First, the quota associated with the top most node (e.g., root node) is always a reserved quota node. This is a quota that a carrier assigns to an organization. Further, a fair usage node cannot be above a reserved node in the quota tree. In other words, a fair usage quota cannot be split to include a reserved quota. Other rules will become apparent as the quota tree is further described. Each node in the quota tree includes usage metric, which is automatically updated as the resources are accessed.

Assume, for purposes of discussion, the cloud-based resource is disk space. When a file is to be uploaded to the cloud provider, a check is performed to see if there is available space to store the file. In some embodiments, the quota server performs the necessary calculations associated with the check. If the available space is greater than or equal to the space that is required for the upload, then the file will be uploaded. If there is not enough available space (e.g., available space is less than the space that is required for the upload), then the file will not be uploaded. The following general formula can be used to determine available space:

$$available\ space = (total\ space) - (reserved\ space\ allocated) - (fair\ use\ space\ used).$$

In the reserved model, there is no fair use space, so that is always zero.

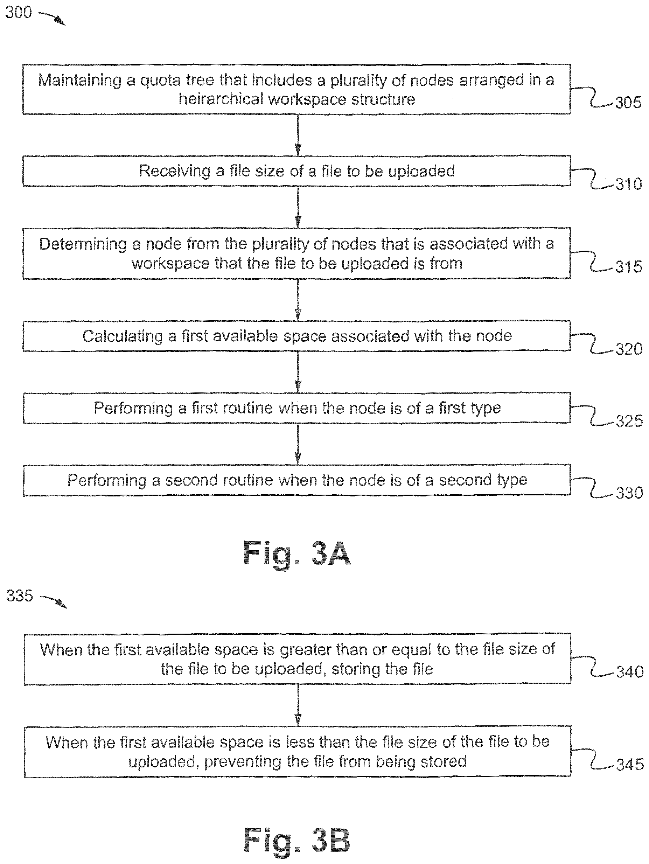

Figures 3A-3C illustrate exemplary methods 330, 335, 350 in accordance with some embodiments. In some embodiments, the methods 330, 335, 350 are performed by a cloud provider, such as the cloud provider 120 of Figure 1, to determine whether resources (e.g., disk space) are available such that a file can be stored by the cloud provider. Referring to Figure 3A, at a Step 305, a quota tree is maintained by the cloud provider. The quota tree includes a plurality of nodes arranged in a hierarchical workspace structure. Each node in the quota tree is associated with an entity within an organization. At a Step 310, a file size of a file to be uploaded is received at the cloud provider. At a Step 315, the cloud provider determines which of the nodes from the plurality of nodes is associated with the workspace that the file to be uploaded is from. At a Step 320, a first available space associated with the node is calculated. At a Step 325, a first routine is performed when the node is of a first type. In some embodiments, the first type is a reserved quota node. At a Step 330, a second routine is performed when the node is of a second type. In some embodiments, the second type is a fair usage node. In some embodiments, a notification is generated regarding the status of the file. The notification can include whether the file can be store, how much available space is left, etc. Usage metrics associated with the quota tree are automatically updated after the Step 325, the Step 330 or both.

Referring to Figure 3B, which pertains to the method 335 associated with the first routine, at a Step 340, when the first available space is greater than or equal to the file size of the file to be uploaded, the file is stored by the cloud provider. In some embodiments, the end-user is allowed to upload the file At a Step 345, when the first available space is less than the file size of the file to be uploaded, the file is prevented from being stored. In some embodiments, the end-user is not allowed to upload the file.

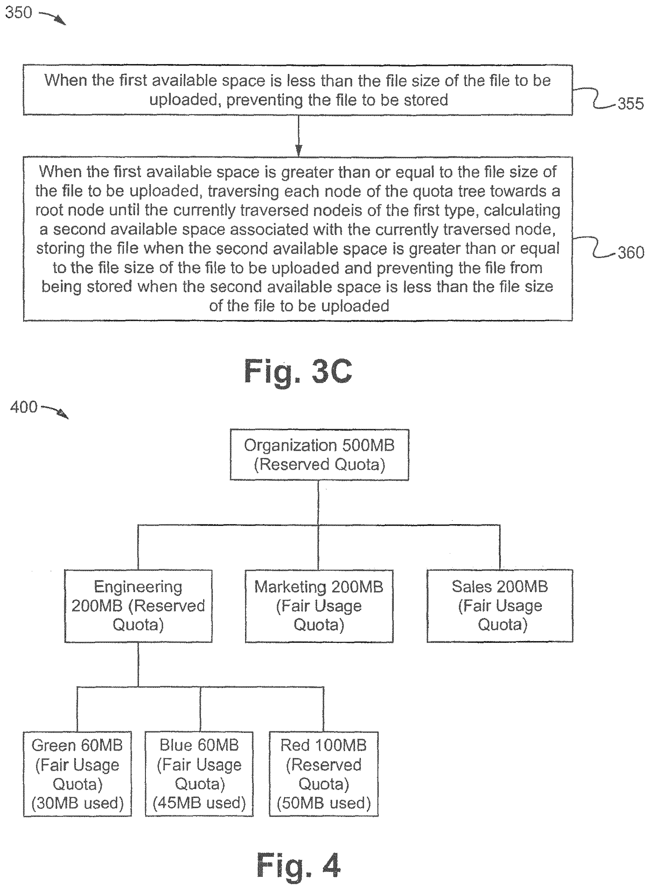

Referring to Figure 3C, which pertains to the method 350 associated with the second routine, at a Step 355, when the first available space is less than the file size of the file to be uploaded, the file is prevented from being stored. In some embodiments, the end-user is not allowed to upload the file. At a Step 360, when the first available space is greater than or equal to the file size of the file to be uploaded, each node of the quota tree towards a root node is traversed until the currently traversed node is of the first type. A second available space associated with the currently traversed node is calculated. When the second available space is greater than or equal to the file size of the file to be uploaded, file is stored. In some embodiments, the end-user is able to upload the file. However, when the second available space is less than the file size of the file to be uploaded, the file is prevented from being stored. In some embodiments, the end-user is not able to upload the file.

Figure 4 illustrates yet another exemplary quota tree 400 in accordance with some embodiments. In this hypothetical, assume an organization has a reserved quota of 500MB of space, which is divided among the Engineering department, the Marketing department and the Sales department. The Engineering department has a reserved quota of 200MB, which is further divided among the Green team, the Blue team, and the Red team. The Green team and the Blue team each has a fair use quota of 60MB, while the Red team has a reserved quota of 100MB. The Marketing department and the Sales department each has a fair use quota of 200MB. As discussed elsewhere, a reserved quota allocation guarantees that a given space is available, whereas a fair use quota allocation does not guarantee that a given space is available.

Further assume that the Red team has already used 50MB of its 100MB reserved quota. The Red team has a guaranteed available space left of 50MB to use. If the Red team need to store a 20MB file, the Red team will be able to do so since the file size is less than the guaranteed available space left (as such, doing so will not exceed the 100MB reserved quota). However, if the Red team needs to store a 55MB file, the Red team will not be able to do so since the file size is more than the guaranteed available space left (as such, doing so will exceed the 100MB reserved quota).

Now assume that the Green team has already used 30MB of its 60MB fair use quota and the Blue team has already used 45MB of its 60MB fair use quota. The Green team has an unguaranteed available space left of 30MB to use, and the Blue team has an unguaranteed available space left of 15MB to use. If the Green team needs to store a 40MB file, the Green team will not be able to do so since the file size is more than the unguaranteed available space left (as such, doing so will exceed its upper limit of 60MB).

Although the Green team is able to store an additional 30MB of data, the Green team is not guaranteed that amount of space. For example, if the Green team needs to store a 30MB file, there is not enough guaranteed available space left for the Engineering department. The guaranteed available space left for the Engineering department is 25MB (200MB total space for the Engineering department - 100 MB reserved space allocated for Red Team - 45MB fair use space used for Blue Team - 30MB fair use space used for Green team). However, if the Green team needs to store a 25MB file, the Green team is able to do so since storing the 25MB will not exceed the Green team's upper limit of 60MB and there is enough guaranteed available space left for the Engineering department.

In some embodiments, the quota tree provides for fine-grained usage analytics. The IT administrator of the organization is able to traverse the quota tree to a particular node to access information about usage associated with the particular node.

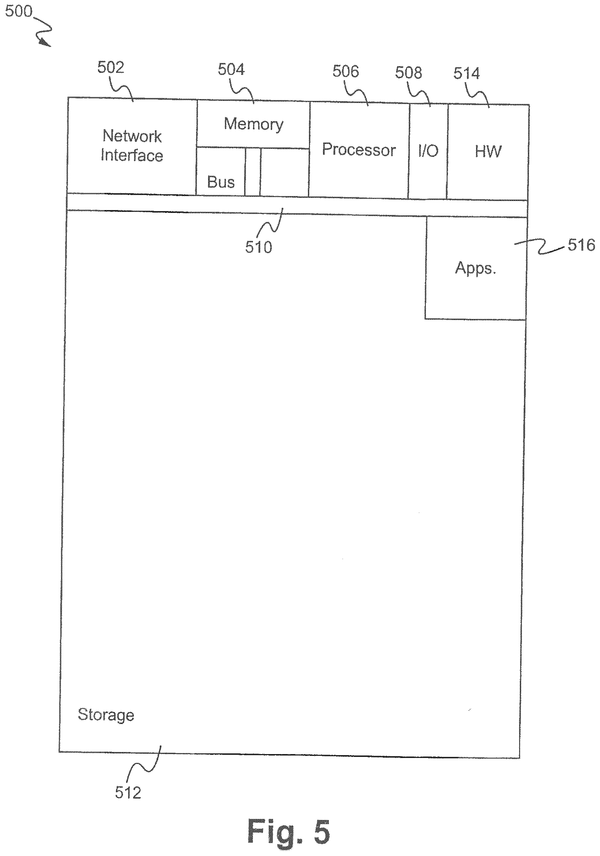

Figure 5 illustrates a block diagram of an exemplary computing device 500 in accordance with some embodiments. The computing device 500 is able to be used to acquire, cache, store, compute, search, transfer, communicate and/or display information. In some embodiments, the quota server 125 of Figure 1 is similarly configured as the computing device 500.

In general, a hardware structure suitable for implementing the computing device 500 includes a network interface 502, a memory 504, processor(s) 106, I/O device(s) 508, a bus 510 and a storage device 512. The choice of processor 506 is not critical as long as a suitable processor with sufficient speed is chosen. In some embodiments, the computing device 500 includes a plurality of processors 506. The memory 504 is able to be any conventional computer memory known in the art. The storage device 512 is able to include a hard drive, CDROM, CDRW, DVD, DVDRW, flash memory card, RAM, ROM, EPROM, EEPROM or any other storage device. The computing device 500 is able to include one or more network interfaces 502. An example of a network interface includes a network card connected to an Ethernet or other type of LAN. The I/O device(s) 508 are able to include one or more of the following: keyboard, mouse, monitor, display, printer, modem, touchscreen, button interface and other devices. Application(s) 514, such as a server-side application implementing the quota service, are likely to be stored in the storage device 512 and memory 504 and are processed by the processor 506. More or less components shown in Figure 5 are able to be included with the computing device 500. The computing device 500 can be a server, mainframe computer, a tablet, a mobile phone, a smart phone, a desktop computer, a laptop computer, a netbook, or any suitable computing device such as special purpose devices.

The system also allows fine-grained tracking of resource usage among more than one products. Assume a cloud provider provides disk space to an organization. The organization is able to allocate the disk space among its entities however the organization chooses. And, each entity is able to use the disk space however the entity chooses, as long as it is within its quota. For example, one of the entities is able to use the disk space for several different products. One product could be to backup images, another product could be to backup audio files, and yet another product could be to backup short messages (SMS, MMS). These product share the same quota that is assigned to the entity. Each product's quota usage can be tracked independently, allowing for greater visibility into total system usage.

In some embodiments, APIs (application programming interfaces) are provided such that each product is able to interface with the quota service to configure or structure a corresponding quota tree and/or to access the shared pool of resources. Each product includes a UI (user interface) that can be web-based, mobile-based, or the like. For example, the UI interface for the product that backs up images is web-based, and the UI interface for the product that backs up short messages is mobile-based.

As demonstrated above, the present solution is superior in that it flexibly allows for efficient allocation of resources within an organization. In particular, the present solution allows for dynamic allocation of resources among numerous entities within an organization such that the common pool of resources can be efficiently shared among the multiple entities, thereby reducing incidences of wasted, unused resources, and incurring expense, and freeing up these resources for work that otherwise would be deferred or not accomplished at all. The present solution allows for "spikes" in usage in one part of the organization to be absorbed by unused resources that would be otherwise specifically dedicated to another part of the organization. The present solution has broad application for sharing cloud-based resources. The present solution takes in only numbers that identify upper and lower bounds and does not apply any semantics to what it is trying to actually restrict.

The following illustrates two exemplary uses of quota:

o An organization uses quota to ensure each entity does not consume more than the expected amount of space. It allows an IT administrator to ensure one entity does not consume excessive amounts of a resource (e.g., storage space) at the determent of the rest of the organization.

o An operator uses quota and other features to allow tiered layers of service, generating more revenue by offering more resources (e.g., storage space). For billing purposes, quota and usage needs are controlled at the organization level not the workspace level, as desired by the IT administrator. This quota and the usage of the quota are also an important metric when calculating the required amounts of backing storage from an operations point of view.

One of ordinary skill in the art will realize other uses and advantages also exist. Thus, one of ordinary skill in the art will understand that the invention is not to be limited by the foregoing illustrative details, but rather is to be defined by the appended claims.

**Claims**

1. A system for dynamic allocation of shared resources, the system comprising:

a cloud-based resource;
a quota server (125) communicatively coupled with the cloud-based resource and configured to:

maintain a quota tree (200) that includes a plurality of nodes arranged in a hierarchical workspace structure;
receive a request to consume the cloud-based resource, wherein the request includes a requested consumption value;
determine a node from the plurality of nodes that is associated with a workspace that the request is from;
calculate a first available resource value associated with the node;
perform a first routine when the node is of a first type; and
perform a second routine when the node is of a second type, wherein the quota tree includes a root node associated with an organization and nodes below the root node, wherein each of the nodes below the root node is associated with a different workspace, wherein the workspace is associated with an entity within the organization, wherein the first type is a reserved quota node, and the second type is a fair use quota node, wherein the quota server is also configured to maintain rules and to build the quota tree according to the rules and to automatically update usage metrics associated with the quota tree, wherein a reserved quota node is arranged to provide a restricted workspace size according to the reserved quota allocation which is guaranteed to be available, and wherein the fair use quota node is arranged to provide a restricted workspace size according to the fair usage quota allocation which is an upper limit to the available workspace size but which is not guaranteed to be the available workspace size.

2. The system of Claim 1, wherein the first routine includes:

when the first available resource value is at least equal to the requested consumption value, allowing the cloud-based resource to be consumed by the workspace; and
when the first available resource value is less than the requested consumption value, preventing the cloud-based resource to be consumed by the workspace.

3. The system of Claim 2, wherein the second routine includes:

when the first available resource value is less than the requested consumption value, preventing the cloud-based resource to be consumed by the workspace; and
when the first available resource value is at least equal to the requested consumption value,
traversing one or more of the nodes of the quota tree towards the root node until a currently traversed node is of the first type,
calculating a second available resource value associated with the currently traversed node,
allowing the cloud-based resource to be consumed by the workspace when the second available resource value is at least equal to the requested consumption value, and
preventing the cloud-based resource to be consumed by the workspace when the second available resource value is less than the requested consumption value.

4. The system of Claim 1, further comprising at least one network component, wherein the at least one network component interfaces with the quota server via a set of APIs.

5. The system of Claim 4, wherein the at least one network component includes a plurality of network components, and wherein the quota server is further configured to track usage of the cloud-based resource of one network component among the plurality of network components.

6. The system of Claim 5, wherein the at least one network component is associated with a single workspace.

7. A non-transitory computer readable medium including memory storing instructions which, when executed by a processor of a computing device, cause the computing device to perform a method of dynamically allocating shared resources, the method comprising:

maintaining a quota tree that includes a plurality of nodes arranged in a hierarchical workspace structure;
receiving a request to consume a cloud-based resource, wherein the request includes a requested consumption value;
determining a node from the plurality of nodes that is associated with a workspace that the request is from;
calculating a first available resource value associated with the node;
performing a first routine when the node is of a first type; and
performing a second routine when the node is of a second type
wherein the quota tree includes a root node associated with an organization and nodes below the root node, wherein each of the nodes below the root node is associated with a different workspace, wherein the workspace is associated with an entity within the organization, wherein first type is a reserved quota node, and the second type is a fair use quota node, wherein the quota server is also configured to maintain rules and to build the quota tree according to the rules and to automatically update usage metrics associated with the quota tree, wherein a reserved quota node is arranged to provide a restricted workspace size according to the reserved quota allocation which is guaranteed to be available, and wherein the fair use quota node is arranged to provide a restricted workspace size according to the fair usage quota allocation which is an upper limit to the available workspace size but which is not guaranteed to be the available workspace size.

8. The non-transitory computer readable medium of Claim 7, wherein the cloud-based resource is disk space, and wherein the request is a request to upload a file to the computing device, and wherein the requested consumption value is a file size of the file to be uploaded to the computing device.

9. The non-transitory computer readable medium of Claim 8, wherein the first routine includes:

when the first available resource value is at least equal to the file size, allowing the file to be uploaded from the workspace; and
when the first available resource value is less than the file size, preventing the file from being uploaded from the workspace.

10. The non-transitory computer readable medium of Claim 9, wherein the second routine includes:

when the first available resource value is less than the file size, preventing the file from being uploaded from the workspace; and
when the first available resource value is at least equal to the file size,
traversing one or more of the nodes of the quota tree towards the root node until a currently traversed node is of the first type,
calculating a second available resource value associated with the currently traversed node,
allowing the file to be uploaded from the workspace when the second available resource value is at least equal to the file size, and
preventing the file from being uploaded from the workspace when the second available resource value is less than the file size.

11. A method of dynamically allocating shared resources by a quota server, the method comprising:

maintaining a quota tree that includes a plurality of nodes arranged in a hierarchical workspace structure;
receiving from a workspace a request to consume a cloud-based resource, wherein the request includes a requested consumption value;
determining a node from the plurality of nodes that is associated with the workspace;
calculating a first available resource value associated with the node;
performing a first routine when the node is of a first type; and
performing a second routine when the node is of a second type
wherein the quota tree includes a root node associated with an organization and nodes below the root node, wherein each of the nodes below the root node is associated with a different workspace, wherein the workspace is associated with an entity within the organization, wherein first type is a reserved quota node, and the second type is a fair use quota node, wherein the quota server is also configured to maintain rules and to build the quota tree according to the rules and to automatically update usage metrics associated with the quota tree, wherein a reserved quota node is arranged to provide a restricted workspace size according to the reserved quota allocation which is guaranteed to be available, and
wherein the fair use quota node is arranged to provide a restricted workspace size according to the fair usage quota allocation which is an upper limit to the available workspace size but which is not guaranteed to be the available workspace size.

12. The method of Claim 11, wherein the first routine includes:

when the first available resource value is at least equal to the requested consumption value, allowing the cloud-based resource to be consumed by the workspace; and
when the first available resource value is less than the requested consumption value, preventing the cloud-based resource to be consumed by the workspace.

13. The method of Claim 12, wherein the second routine includes:

when the first available resource value is less than the requested consumption value, preventing the cloud-based resource to be consumed by the workspace; and
when the first available resource value is at least equal to the requested consumption value,

traversing one or more of the nodes of the quota tree towards the root node until a currently traversed node is of the first type,

calculating a second available resource value associated with the currently traversed node,

allowing the cloud-based resource to be consumed by the workspace when the second available resource value is at least equal to the requested consumption value, and

preventing the cloud-based resource to be consumed by the workspace when the second available resource value is less than the requested consumption value.

**Patentansprüche**

1. System zur dynamischen Zuweisung gemeinsam genutzter Ressourcen, wobei das System umfasst:

eine cloudgestützte Ressource;

einen Kontingentserver (125), der kommunikativ mit der cloudgestützten Ressource gekoppelt und dafür konfiguriert ist:

einen Kontingentbaum (200) zu verwalten, der eine Vielzahl von Knoten einschließt, die in einer hierarchischen Workspace-Struktur angeordnet sind;

eine Anforderung, die cloudgestützte Ressource zu verbrauchen, zu empfangen, worin die Anforderung einen angeforderten Verbrauchswert einschließt;

einen Knoten aus der Vielzahl von Knoten zu bestimmen, der mit einem Workspace assoziiert ist, von dem die Anforderung kommt;

einen ersten Wert verfügbarer Ressourcen zu berechnen, der mit dem Knoten assoziiert ist;

eine erste Routine durchzuführen, wenn der Knoten von einem ersten Typ ist; und

eine zweite Routine durchzuführen, wenn der Knoten von einem zweiten Typ ist, worin der Kontingentbaum einen mit einer Organisation assoziierten Root-Knoten und Knoten unterhalb des Root-Knotens einschließt, worin jeder der Knoten unterhalb des Root-Knotens mit einem anderen Workspace assoziiert ist, worin der Workspace mit einer Instanz innerhalb der Organisation assoziiert ist, worin der erste Typ ein Knoten mit reserviertem Kontingent ist und der zweite Typ ein Knoten mit Kontingent zur angemessenen Verwendung ist, worin der Kontingentserver außerdem dafür konfiguriert ist, Regeln zu verwalten und den Kontingentbaum gemäß den Regeln aufzubauen und mit dem Kontingentbaum assoziierte Nutzungsmetriken automatisch zu aktualisieren,

worin ein Knoten mit reserviertem Kontingent dafür eingerichtet ist, gemäß der Zuweisung des reservierten Kontingents eine beschränkte Workspace-Größe bereitzustellen, die als verfügbar garantiert wird, und worin der Knoten mit Kontingent zur angemessenen Verwendung dafür eingerichtet ist, gemäß der Zuweisung des Kontingents zur angemessenen Verwendung eine beschränkte Workspace-Größe bereitzustellen, die eine Obergrenze für die verfügbare Workspace-Größe ist, die aber nicht als die verfügbare Workspace-Größe garantiert wird.

2. System nach Anspruch 1, worin die erste Routine einschließt:

wenn der erste Wert verfügbarer Ressourcen mindestens gleich dem angeforderten Verbrauchswert ist: Gestatten, dass die cloudgestützte Ressource durch den Workspace verbraucht wird; und

wenn der erste Wert verfügbarer Ressourcen kleiner als der angeforderte Verbrauchswert ist: Verhindern, dass die cloudgestützte Ressource durch den Workspace verbraucht wird.

3. System nach Anspruch 2, worin die zweite Routine einschließt:

wenn der erste Wert verfügbarer Ressourcen kleiner als der angeforderte Verbrauchswert ist: Verhindern, dass die cloudgestützte Ressource durch den Workspace verbraucht wird; und

wenn der erste Wert verfügbarer Ressourcen mindestens gleich dem angeforderten Verbrauchswert ist:

Durchlaufen eines oder mehrerer der Knoten des Kontingentbaums zum Root-Knoten, bis ein aktuell durchlaufener Knoten vom ersten Typ ist,

Berechnen eines zweiten Werts verfügbarer Ressourcen, der mit dem aktuell durchlaufenen Knoten assoziiert ist,

Gestatten, dass die cloudgestützte Ressource durch den Workspace verbraucht wird, wenn der zweite Wert verfügbarer Ressourcen mindestens gleich dem angeforderten Verbrauchswert ist, und

Verhindern, dass die cloudgestützte Ressource durch den Workspace verbraucht wird, wenn der zweite Wert verfügbarer Ressourcen kleiner als der angeforderte Verbrauchswert ist.

**4.** System nach Anspruch 1, ferner mindestens eine Netzwerkkomponente umfassend, worin die mindestens eine Netzwerkkomponente über eine Menge von APIs mit dem Kontingentserver gekoppelt ist.

**5.** System nach Anspruch 4, worin die mindestens eine Netzwerkkomponente eine Vielzahl von Netzwerkkomponenten einschließt und worin der Kontingentserver dafür konfiguriert ist, die Nutzung der cloudgestützten Ressource einer Netzwerkkomponente unter der Vielzahl von Netzwerkkomponenten zu verfolgen.

**6.** System nach Anspruch 5, worin die mindestens eine Netzwerkkomponente mit einem einzelnen Workspace assoziiert ist.

**7.** Nichtflüchtiges computerlesbares Medium, das einen Speicher einschließt, der Anweisungen speichert, die, wenn sie durch einen Prozessor einer Computervorrichtung ausgeführt werden, die Computervorrichtung veranlassen, ein Verfahren zur dynamischen Zuweisung gemeinsam genutzter Ressourcen durchzuführen, wobei das Verfahren umfasst:

Verwalten eines Kontingentbaums, der eine Vielzahl von Knoten einschließt, die in einer hierarchischen Workspace-Struktur angeordnet sind;

Empfangen einer Anforderung, eine cloudgestützte Ressource zu verbrauchen, worin die Anforderung einen angeforderten Verbrauchswert einschließt;

Bestimmen eines Knotens aus der Vielzahl von Knoten, der mit einem Workspace assoziiert ist, von dem die Anforderung kommt;

Berechnen eines ersten Werts verfügbarer Ressourcen, der mit dem Knoten assoziiert ist;

Durchführen einer ersten Routine, wenn der Knoten von einem ersten Typ ist; und

Durchführen einer zweiten Routine, wenn der Knoten von einem zweiten Typ ist; worin der Kontingentbaum einen mit einer Organisation assoziierten Root-Knoten und Knoten unterhalb des Root-Knotens einschließt, worin jeder der Knoten unterhalb des Root-Knotens mit einem anderen Workspace assoziiert ist, worin der Workspace mit einer Instanz innerhalb der Organisation assoziiert ist, worin der erste Typ ein Knoten mit reserviertem Kontingent ist und der zweite Typ ein Knoten mit Kontingent zur angemessenen Verwendung ist, worin der Kontingentserver außerdem dafür konfiguriert ist, Regeln zu verwalten und den Kontingentbaum gemäß den Regeln aufzubauen und mit dem Kontingentbaum assoziierte Nutzungsmetriken automatisch zu aktualisieren,

worin ein Knoten mit reserviertem Kontingent dafür eingerichtet ist, gemäß der Zuweisung des reservierten Kontingents eine beschränkte Workspace-Größe bereitzustellen, die als verfügbar garantiert wird, und

worin der Knoten mit Kontingent zur angemessenen Verwendung dafür eingerichtet ist, gemäß der Zuweisung des Kontingents zur angemessenen Verwendung eine beschränkte Workspace-Größe bereitzustellen, die eine Obergrenze für die verfügbare Workspace-Größe ist, die aber nicht als die verfügbare Workspace-Größe garantiert wird.

**8.** Nichtflüchtiges computerlesbares Medium nach Anspruch 7, worin die cloudgestützte Ressource Speicherplatz ist und worin die Anforderung eine Anforderung ist, eine Datei zur Computervorrichtung hochzuladen, und worin der angeforderte Verbrauchswert eine Dateigröße der Datei ist, die zur Computervorrichtung hochgeladen werden soll.

**9.** Nichtflüchtiges computerlesbares Medium nach Anspruch 8, worin die erste Routine einschließt:

wenn der erste Wert verfügbarer Ressourcen mindestens gleich der Dateigröße ist: Gestatten, dass die Datei durch den Workspace hochgeladen wird; und

wenn der erste Wert verfügbarer Ressourcen kleiner als die Dateigröße ist: Verhindern, dass die Datei durch den Workspace hochgeladen wird.

**10.** Nichtflüchtiges computerlesbares Medium nach Anspruch 9, worin die zweite Routine einschließt:

wenn der erste Wert verfügbarer Ressourcen kleiner als die Dateigröße ist: Verhindern, dass die die Datei durch den Workspace hochgeladen wird; und

wenn der erste Wert verfügbarer Ressourcen mindestens gleich der Dateigröße ist:

Durchlaufen eines oder mehrerer der Knoten des Kontingentbaums zum Root-Knoten, bis ein aktuell durchlaufener Knoten vom ersten Typ ist,

Berechnen eines zweiten Werts verfügbarer Ressourcen, der mit dem aktuell durchlaufenen Knoten assoziiert ist,

Gestatten, dass die Datei durch den Workspace hochgeladen wird, wenn der zweite Wert verfügbarer Ressourcen mindestens gleich der Dateigröße ist, und

Verhindern, dass die Datei durch den Workspace hochgeladen wird, wenn der zweite Wert verfügbarer Ressourcen kleiner als die Dateigröße ist.

11. Verfahren zur dynamischen Zuweisung gemeinsam genutzter Ressourcen durch einen Kontingentserver, wobei das Verfahren umfasst:

Verwalten eines Kontingentbaums, der eine Vielzahl von Knoten einschließt, die in einer hierarchischen Workspace-Struktur angeordnet sind;

Empfangen einer Anforderung von einem Workspace, eine cloudgestützte Ressource zu verbrauchen, worin die Anforderung einen angeforderten Verbrauchswert einschließt;

Bestimmen eines Knotens aus der Vielzahl von Knoten, der mit dem Workspace assoziiert ist;

Berechnen eines ersten Werts verfügbarer Ressourcen, der mit dem Knoten assoziiert ist;

Durchführen einer ersten Routine, wenn der Knoten von einem ersten Typ ist; und

Durchführen einer zweiten Routine, wenn der Knoten von einem zweiten Typ ist; worin der Kontingentbaum einen mit einer Organisation assoziierten Root-Knoten und Knoten unterhalb des Root-Knotens einschließt, worin jeder der Knoten unterhalb des Root-Knotens mit einem anderen Workspace assoziiert ist, worin der Workspace mit einer Instanz innerhalb der Organisation assoziiert ist, worin der erste Typ ein Knoten mit reserviertem Kontingent ist und der zweite Typ ein Knoten mit Kontingent zur angemessenen Verwendung ist, worin der Kontingentserver außerdem dafür konfiguriert ist, Regeln zu verwalten und den Kontingentbaum gemäß den Regeln aufzubauen und mit dem Kontingentbaum assoziierte Nutzungsmetriken automatisch zu aktualisieren,

worin ein Knoten mit reserviertem Kontingent dafür eingerichtet ist, gemäß der Zuweisung des reservierten Kontingents eine beschränkte Workspace-Größe bereitzustellen, die als verfügbar garantiert wird, und

worin der Knoten mit Kontingent zur angemessenen Verwendung dafür eingerichtet ist, gemäß der Zuweisung des Kontingents zur angemessenen Verwendung eine beschränkte Workspace-Größe bereitzustellen, die eine Obergrenze für die verfügbare Workspace-Größe ist, die aber nicht als die verfügbare Workspace-Größe garantiert wird.

12. Verfahren nach Anspruch 11, worin die erste Routine einschließt:

wenn der erste Wert verfügbarer Ressourcen mindestens gleich dem angeforderten Verbrauchswert ist: Gestatten, dass die cloudgestützte Ressource durch den Workspace verbraucht wird; und

wenn der erste Wert verfügbarer Ressourcen kleiner als der angeforderte Verbrauchswert ist: Verhindern, dass die cloudgestützte Ressource durch den Workspace verbraucht wird.

13. Verfahren nach Anspruch 12, worin die zweite Routine einschließt:

wenn der erste Wert verfügbarer Ressourcen kleiner als der angeforderte Verbrauchswert ist: Verhindern, dass die cloudgestützte Ressource durch den Workspace verbraucht wird; und

wenn der erste Wert verfügbarer Ressourcen mindestens gleich dem angeforderten Verbrauchswert ist:

Durchlaufen eines oder mehrerer der Knoten des Kontingentbaums zum Root-Knoten, bis ein aktuell durchlaufener Knoten vom ersten Typ ist,

Berechnen eines zweiten Werts verfügbarer Ressourcen, der mit dem aktuell durchlaufenen Knoten assoziiert ist,

Gestatten, dass die cloudgestützte Ressource durch den Workspace verbraucht wird, wenn der zweite Wert verfügbarer Ressourcen mindestens gleich dem angeforderten Verbrauchswert ist, und

Verhindern, dass die cloudgestützte Ressource durch den Workspace verbraucht wird, wenn der zweite Wert verfügbarer Ressourcen kleiner als der angeforderte Verbrauchswert ist.

**Revendications**

1. Système pour l'allocation dynamique de ressources partagées, le système comprenant :

   une ressource basée sur nuage ;
   un serveur de quota (125) qui est couplé en communication avec la ressource basée sur nuage et qui est configuré de manière à :

   maintenir une arborescence de quota (200) qui inclut une pluralité de noeuds agencés selon une structure d'espaces de travail hiérarchique ;
   recevoir une requête pour consommer la ressource basée sur nuage, dans lequel la requête inclut une valeur de consommation demandée en requête ;
   déterminer un noeud parmi la pluralité de noeuds qui est associé à un espace de travail depuis lequel la requête provient ;
   calculer une première valeur de ressources disponibles associée au noeud ;
   exécuter un premier programme lorsque le noeud est d'un premier type ; et
   exécuter un second programme lorsque le noeud est d'un second type, dans lequel l'arborescence de quota inclut un noeud de racine qui est associé à une organisation et des noeuds au-dessous du noeud de racine, dans lequel chacun des noeuds au-dessous du noeud de racine est associé à un espace de travail différent, dans lequel l'espace de travail est associé à une entité à l'intérieur de l'organisation, dans lequel le premier type est un noeud de quota réservé et le second type est un noeud de quota à utilisation équitable, dans lequel le serveur de quota est également configuré de manière à maintenir des règles et de manière à construire l'arborescence de quota conformément aux règles et de manière à mettre à jour de manière automatique des mesures d'utilisation associées à l'arborescence de quota, dans lequel :

   un noeud de quota réservé est agencé de manière à fournir une dimension d'espace de travail restreinte conformément à l'allocation de quota réservé, laquelle dimension est garantie comme étant disponible ; et dans lequel :

   le noeud de quota à utilisation équitable est agencé de manière à fournir une dimension d'espace de travail restreinte conformément à l'allocation de quota à utilisation équitable, laquelle dimension est une limite supérieure à la dimension d'espace de travail disponible mais n'est pas garantie d'être la dimension d'espace de travail disponible.

2. Système selon la revendication 1, dans lequel le premier programme inclut :

   lorsque la première valeur de ressources disponibles est au moins égale à la valeur de consommation demandée en requête, le fait d'autoriser la consommation par l'espace de travail de la ressource basée sur nuage ; et
   lorsque la première valeur de ressources disponibles est inférieure à la valeur de consommation demandée en requête, le fait d'empêcher la consommation par l'espace de travail de la ressource basée sur nuage.

3. Système selon la revendication 2, dans lequel le second programme inclut :

   lorsque la première valeur de ressources disponibles est inférieure à la valeur de consommation demandée en requête, le fait d'empêcher la consommation par l'espace de travail de la ressource basée sur nuage ; et
   lorsque la première valeur de ressources disponibles est au moins égale à la valeur de consommation demandée en requête,
   la traversée d'un ou de plusieurs des noeuds de l'arborescence de quota en direction du noeud de racine jusqu'à ce qu'un noeud traversé présentement soit du premier type ;
   le calcul d'une seconde valeur de ressources disponibles associée au noeud traversé présentement ;
   le fait d'autoriser la consommation par l'espace de travail de la ressource basée sur nuage lorsque la seconde valeur de ressources disponibles est au moins égale à la valeur de consommation demandée en requête ; et
   le fait d'empêcher la consommation par l'espace de travail de la ressource basée sur nuage lorsque la seconde valeur de ressources disponibles est inférieure à la valeur de consommation demandée en requête.

4. Système selon la revendication 1, comprenant en outre au moins un composant de réseau, dans lequel l'au moins un composant de réseau réalise une fonction d'interface avec le serveur de quota via un jeu d'applications appelées des APIs.

5. Système selon la revendication 4, dans lequel l'au moins un composant de réseau inclut une pluralité de composants de réseau, et dans lequel le serveur de quota est en outre configuré de manière à effectuer un suivi de l'utilisation de la ressource basée sur nuage d'un composant de réseau pris parmi la pluralité de composants de réseau.

6. Système selon la revendication 5, dans lequel l'au moins un composant de réseau est associé à un unique espace de travail.

7. Support non transitoire lisible par ordinateur incluant une mémoire qui stocke des instructions qui, lorsqu'elles sont exécutées par un processeur d'un dispositif informatique, ont pour effet que le dispositif informatique met en oeuvre un procédé d'allocation dynamique de ressources partagées, le procédé comprenant :

le maintien d'une arborescence de quota qui inclut une pluralité de noeuds agencés selon une structure d'espaces de travail hiérarchique ;
la réception d'une requête pour consommer une ressource basée sur nuage, dans lequel la requête inclut une valeur de consommation demandée en requête ;
la détermination d'un noeud parmi la pluralité de noeuds qui est associé à un espace de travail depuis lequel la requête provient ;
le calcul d'une première valeur de ressources disponibles associée au noeud ;
l'exécution d'un premier programme lorsque le noeud est d'un premier type ; et
l'exécution d'un second programme lorsque le noeud est d'un second type, dans lequel l'arborescence de quota inclut un noeud de racine qui est associé à une organisation et des noeuds au-dessous du noeud de racine, dans lequel chacun des noeuds au-dessous du noeud de racine est associé à un espace de travail différent, dans lequel l'espace de travail est associé à une entité à l'intérieur de l'organisation, dans lequel le premier type est un noeud de quota réservé et le second type est un noeud de quota à utilisation équitable, dans lequel le serveur de quota est également configuré de manière à maintenir des règles et de manière à construire l'arborescence de quota conformément aux règles et de manière à mettre à jour de manière automatique des mesures d'utilisation associées à l'arborescence de quota, dans lequel :

un noeud de quota réservé est agencé de manière à fournir une dimension d'espace de travail restreinte conformément à l'allocation de quota réservé, laquelle dimension est garantie comme étant disponible ; et dans lequel :
le noeud de quota à utilisation équitable est agencé de manière à fournir une dimension d'espace de travail restreinte conformément à l'allocation de quota à utilisation équitable, laquelle dimension est une limite supérieure à la dimension d'espace de travail disponible mais n'est pas garantie d'être la dimension d'espace de travail disponible.

8. Support non transitoire lisible par ordinateur selon la revendication 7, dans lequel la ressource basée sur nuage est un espace de disque, et dans lequel la requête est une requête pour téléverser un fichier sur le dispositif informatique, et dans lequel la valeur de consommation demandée en requête est une dimension de fichier du fichier destiné à être téléversé sur le dispositif informatique.

9. Support non transitoire lisible par ordinateur selon la revendication 8, dans lequel le premier programme inclut :

lorsque la première valeur de ressources disponibles est au moins égale à la dimension de fichier, le fait d'autoriser le téléversement du fichier depuis l'espace de travail ; et
lorsque la première valeur de ressources disponibles est inférieure à la dimension de fichier, le fait d'empêcher le téléversement du fichier depuis l'espace de travail.

10. Support non transitoire lisible par ordinateur selon la revendication 9, dans lequel le second programme inclut :

lorsque la première valeur de ressources disponibles est inférieure à la dimension de fichier, le fait d'empêcher le téléversement du fichier depuis l'espace de travail ; et
lorsque la première valeur de ressources disponibles est au moins égale à la dimension de fichier, la traversée d'un ou de plusieurs des noeuds de l'arborescence de quota en direction du noeud de racine jusqu'à ce qu'un noeud traversé présentement soit du premier type ;
le calcul d'une seconde valeur de ressources disponibles associée au noeud traversé présentement ;
le fait d'autoriser le téléversement du fichier depuis l'espace de travail lorsque la seconde valeur de ressources disponibles est au moins égale à la dimension de fichier ; et

le fait d'empêcher le téléversement du fichier depuis l'espace de travail lorsque la seconde valeur de ressources disponibles est inférieure à la dimension de fichier.

**11.** Procédé d'allocation dynamique de ressources partagées par un serveur de quota, le procédé comprenant :

le maintien d'une arborescence de quota qui inclut une pluralité de noeuds agencés selon une structure d'espaces de travail hiérarchique ;

la réception, depuis un espace de travail, d'une requête pour consommer une ressource basée sur nuage, dans lequel la requête inclut une valeur de consommation demandée en requête ;

la détermination d'un noeud parmi la pluralité de noeuds qui est associé à l'espace de travail ;

le calcul d'une première valeur de ressources disponibles associée au noeud ;

l'exécution d'un premier programme lorsque le noeud est d'un premier type ; et

l'exécution d'un second programme lorsque le noeud est d'un second type, dans lequel l'arborescence de quota inclut un noeud de racine qui est associé à une organisation et des noeuds au-dessous du noeud de racine, dans lequel chacun des noeuds au-dessous du noeud de racine est associé à un espace de travail différent, dans lequel l'espace de travail est associé à une entité à l'intérieur de l'organisation, dans lequel le premier type est un noeud de quota réservé et le second type est un noeud de quota à utilisation équitable, dans lequel le serveur de quota est également configuré de manière à maintenir des règles et de manière à construire l'arborescence de quota conformément aux règles et de manière à mettre à jour de manière automatique des mesures d'utilisation associées à l'arborescence de quota, dans lequel :

un noeud de quota réservé est agencé de manière à fournir une dimension d'espace de travail restreinte conformément à l'allocation de quota réservé, laquelle dimension est garantie comme étant disponible ; et dans lequel :

le noeud de quota à utilisation équitable est agencé de manière à fournir une dimension d'espace de travail restreinte conformément à l'allocation de quota à utilisation équitable, laquelle dimension est une limite supérieure à la dimension d'espace de travail disponible mais n'est pas garantie d'être la dimension d'espace de travail disponible.

**12.** Procédé selon la revendication 11, dans lequel le premier programme inclut :

lorsque la première valeur de ressources disponibles est au moins égale à la valeur de consommation demandée en requête, le fait d'autoriser la consommation par l'espace de travail de la ressource basée sur nuage ; et lorsque la première valeur de ressources disponibles est inférieure à la valeur de consommation demandée en requête, le fait d'empêcher la consommation par l'espace de travail de la ressource basée sur nuage.

**13.** Procédé selon la revendication 12, dans lequel le second programme inclut :

lorsque la première valeur de ressources disponibles est inférieure à la valeur de consommation demandée en requête, le fait d'empêcher la consommation par l'espace de travail de la ressource basée sur nuage ; et lorsque la première valeur de ressources disponibles est au moins égale à la valeur de consommation demandée en requête, la traversée d'un ou de plusieurs des noeuds de l'arborescence de quota en direction du noeud de racine jusqu'à ce qu'un noeud traversé présentement soit du premier type ;

le calcul d'une seconde valeur de ressources disponibles associée au noeud traversé présentement ; le fait d'autoriser la consommation par l'espace de travail de la ressource basée sur nuage lorsque la seconde valeur de ressources disponibles est au moins égale à la valeur de consommation demandée en requête ; et le fait d'empêcher la consommation par l'espace de travail de la ressource basée sur nuage lorsque la seconde valeur de ressources disponibles est inférieure à la valeur de consommation demandée en requête.

**Fig. 1**

**Fig. 2A**

**Fig. 2B**

300 —

Maintaining a quota tree that includes a plurality of nodes arranged in a heirarchical workspace structure —305

Receiving a file size of a file to be uploaded —310

Determining a node from the plurality of nodes that is associated with a workspace that the file to be uploaded is from —315

Calculating a first available space associated with the node —320

Performing a first routine when the node is of a first type —325

Performing a second routine when the node is of a second type —330

# Fig. 3A

335 —

When the first available space is greater than or equal to the file size of the file to be uploaded, storing the file —340

When the first available space is less than the file size of the file to be uploaded, preventing the file from being stored —345

# Fig. 3B

350 ⟍

| |
|---|
| When the first available space is less than the file size of the file to be uploaded, preventing the file to be stored |

—355

| |
|---|
| When the first available space is greater than or equal to the file size of the file to be uploaded, traversing each node of the quota tree towards a root node until the currently traversed nodeis of the first type, calculating a second available space associated with the currently traversed node, storing the file when the second available space is greater than or equal to the file size of the file to be uploaded and preventing the file from being stored when the second available space is less than the file size of the file to be uploaded |

—360

# Fig. 3C

400 ⟍

**Fig. 4**

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014095826 A

- US 2005050107 A

**Non-patent literature cited in the description**

- **KARMON K. et al.** GWiQ-P: an efficient decentralized grid-wide quota enforcement protocol. *High Performance Distributed Computing, 2005, HPDC-14 Proceedings, 14th IEEE International Symposium on Research Triangle Park,* 222-232